# EUROPEAN PATENT SPECIFICATION

(11) **EP 3 739 671 B1**
(45) Date of publication and mention of the grant of the patent: **13.07.2022**
(21) Application number: 19822921.3
(22) Date of filing: 15.04.2019
(51) Int. Cl.: H01M 10/04, H01M 10/0587, H01M 10/42, H01M 50/536, H01M 50/538, H01M 50/572

(54) **ELECTRODE ASSEMBLY WITH IMPROVED CONNECTION BETWEEN CURRENT COLLECTOR AND ELECTRODE TAB, AND METHOD OF MANUFACTURING THE SAME**
ELEKTRODENANORDNUNG MIT VERBESSERTER VERBINDUNG ZWISCHEN STROMABNEHMER UND ELEKTRODENLASCHE, UND VERFAHREN ZUR HERSTELLUNG DERSELBEN
ENSEMBLE ÉLECTRODE AYANT UNE CONNEXION AMÉLIORÉE ENTRE UN COLLECTEUR DE COURANT ET UNE LANGUETTE D'ÉLECTRODE, ET SON PROCÉDÉ DE FABRICATION

(30) Priority: 20.06.2018 KR 20180071080
(43) Date of publication of application: 18.11.2020
(73) Proprietor: LG Energy Solution, Ltd., Seoul 07335 (KR)
(72) Inventor: KIM, Kyung Min, Daejeon 34122 (KR)
(74) Representative: Plasseraud IP
(86) International application number: PCT/KR2019/004512
(87) International publication number: WO 2019/245143

(56) References cited:
- JP-A- 2006 260 990
- JP-A- 2015 032 377
- JP-A- 2015 038 876
- JP-A- 2016 081 681
- JP-A- 2016 181 469
- KR-A- 20060 011 247
- KR-A- 20160 115 197
- US-A1- 2006 040 181
- US-A1- 2017 214 056

## Description

### BACKGROUND OF THE INVENTION

### (a) Field of the Invention

### [Technical Field]

This application claims priority to and the benefit of Korean Patent Application No. 10-2018-0071080 filed in the Korean Intellectual Property Office on June 20, 2018.

The present disclosure relates to a rechargeable battery and a manufacturing method thereof, and further relates to an electrode assembly having an improved electrode tab and a current collector connection structure. The present invention relates to an electrode assembly manufacturing method as described in the appended claims.

### [Background Art]

In recent years, as a demand for portable electronic devices such as a laptop, a video camera, and a portable phone has increased sharply and development of electric vehicles, energy storage batteries, robots, and satellites has become full-scale, many studies for a rechargeable battery used as a driving power source thereof have been undertaken.

Examples of such rechargeable batteries include a nickel cadmium battery, a nickel hydrogen battery, a nickel zinc battery, and a lithium secondary battery. Among them, since the lithium rechargeable battery has less of a memory effect than the rechargeable battery of the nickel type, it is widely used in high-tech electronic devices due to a free charging and discharging, a very low self-discharge rate, a high operating voltage, and high energy density per unit weight.

However, the lithium rechargeable battery is exposed to a high temperature, or when a large current flows in a short time due to an overcharge, an external short circuit, a puncture, local damage, etc., there is a risk of the battery being heated by IR heat and occurrence of an explosion. That is, when the pressure or temperature of the battery rises, a decomposition reaction of an active material and many side reactions proceed, thereby rapidly raising the temperature of the battery, which further accelerates the reaction between the electrolyte and the electrode. Eventually, a thermal runaway phenomenon occurs in which the temperature of the battery rises sharply, and when the temperature rises to a certain level, ignition of the battery may occur, and the lithium rechargeable battery explosion occurs due to the increased internal pressure of the battery.

Therefore, various methods are being discussed to effectively control the lithium rechargeable battery when it is placed in an abnormal operating state such as an overcurrent state or a high temperature state. As a part of efforts to ensure safety, there is a method of mounting a device outside the cell and a method of using the material inside the cell. PTC and CID devices, using the temperature change, protection circuits controlling the voltage and the current, and safety vents using the change in the internal pressure of the battery correspond to the former, and the latter is the addition of materials that can be changed physically, chemically, or electrochemically according to the changes in the temperature, the voltage, and the current inside the battery.

In the case of using the material inside the cell, there is a merit that it is possible to apply it to all kinds of the batteries without requiring an additional installation process, however since there are problems that the performance of the battery such as a rate characteristic or capacity of the battery is deteriorated due to the addition of the material and operation with reliability is not provided, a variety of measures that can bring about a definite current blocking effect while minimizing battery performance degradation are being discussed.

Lithium rechargeable batteries mainly use a lithium oxide and a carbon material as a positive active material and a negative active material, respectively. A positive electrode and a negative electrode in which the positive active material and the negative active material are respectively coated on the current collectors are disposed via a separator interposed therebetween to configure an electrode assembly, and the electrode assembly is received and sealed with an electrolyte solution together in an exterior member.

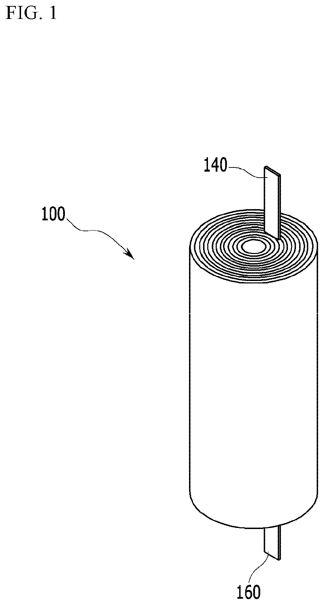

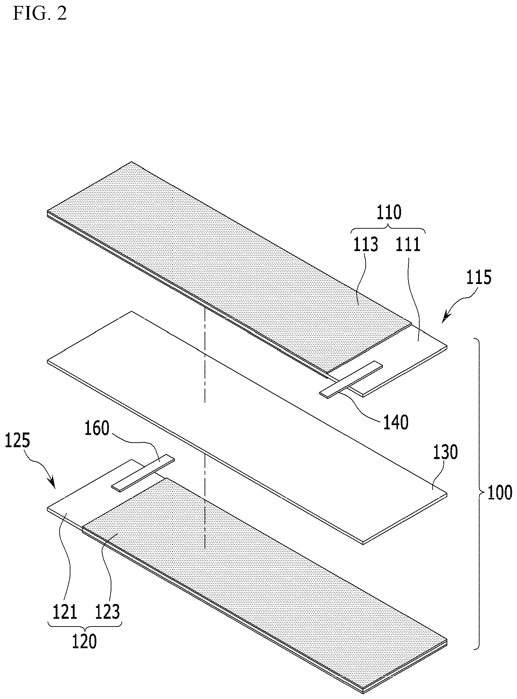

FIG. 1 is a perspective view of a conventional jelly-roll type of electrode assembly, and FIG. 2 is an exploded perspective view of the electrode assembly shown in FIG. 1 before being wound.

Referring to FIG. 1 and FIG. 2, the conventional jelly-roll type of electrode assembly electrode assembly 100 includes a positive electrode 110, a negative electrode 120, and a separator 130, and a separator 130 that is interposed between the positive electrode 110 and the negative electrode 120.

The positive electrode 110 includes a positive current collector 111 of a sheet shape and a positive active material layer 113 formed on the positive current collector 111. The positive current collector 111 includes a positive uncoated region 115 that is a part in which a positive active material layer 113 is not formed. The positive uncoated region 115 is disposed on both surfaces of the positive current collector 111.

A positive tab 140 is attached to the positive uncoated region 115 by welding such that the positive current collector 111 and the positive tab 140 are connected.

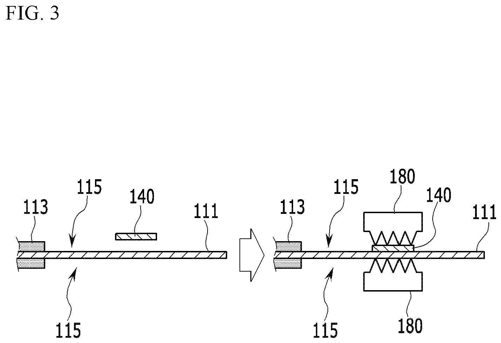

FIG. 3 is a schematic cross-sectional view of a case in which a positive tab is welded to the conventional positive current collector.

Referring to FIG. 3, the positive current collector 111 and the positive tab 140 are placed between welding devices 180, and ultrasonic welding or resistance welding is performed. As the welding device 180 damages the active material layer, as shown in FIG. 2, the positive uncoated region 115 is provided on both surfaces of the positive current collector 111.

In the conventional negative electrode 120, the same or similar structure as the conventional positive electrode 110 is applied so that a negative uncoated region 125 is provided on both surfaces of a negative current collector 121.

The positive uncoated region 115 and the negative uncoated region 125 provided on both surfaces of the positive current collector 111 and the negative current collector 121 cause the capacity reduction of the electrode assembly 100 by not forming the active material layer in the entire space. In a high output model, the number of positive tabs 140 and negative tabs 160 increases, which leads to a further increase in the area of the positive uncoated region 115 and the negative uncoated region 125, thus further reducing the cell capacity.

Therefore, it is required to study a lithium rechargeable battery which prevents the risk of danger such as explosion on the overcharge of the lithium rechargeable battery and simultaneously minimizes the capacity deterioration of the battery in order to meet the trend of high-capacity and slimming at the same time.

JP 2016 081681 A, and US 2006/040181 A1 disclose an adhesive layer between an electrode tab and a current collector.

### [Disclosure]

Exemplary embodiments of the present disclosure to solve the above-described problems provide an electrode assembly for a rechargeable battery and a manufacturing method thereof for realizing the cell capacity while obtaining safety against the overcharge by improving a connection structure between the electrode tab and the current collector.

An electrode assembly manufactured by a method according to an exemplary embodiment of the present invention includes: an electrode current collector; an uncoated region in which an electrode active material layer is not formed at one surface of the electrode current collector; an electrode tab disposed at the uncoated region; and a conductive adhesive part disposed between the uncoated region and the electrode tab, wherein the conductive adhesive part includes a gas generation material.

The conductive adhesive part may further include a conductive material and an adhesive material.

The adhesive material, the conductive material, and the gas generation material may form the conductive adhesive part as a slurry type.

When the gas generation material reaches a decomposition voltage, a gas may be generated such that a volume of the conductive adhesive part may increase.

The decomposition voltage may be a voltage of 4.5 V or more.

The gas generation material may include at least one among Li₂CO₃, K₂CO₃, CaCO₃, BaCO₃, and SrCO₃.

The thickness of the conductive adhesive part may be 10 micrometers or less.

In an exemplary embodiment, the electrode tab may be a metal belt-type member having a width and a length, the electrode tab may include an electrode tab overlapping part stacked at the uncoated region and an electrode tab extension part extending from the electrode tab overlapping part to the outside of the electrode current collector, and the conductive adhesive part may be formed of the same shape and area as the electrode tab overlapping part.

An electrode assembly manufacturing method for a rechargeable battery according to the present invention as defined in the appended set of claims includes: coating a conductive adhesive solution including a gas generation material on a metal plate material for an electrode tab; forming a releasing film on the metal plate material for the electrode tab to cover the coated conductive adhesive solution; drying the conductive adhesive solution to be changed into a conductive adhesive part; a step slitting the metal plate material for the electrode tab to form a plurality of strips; cutting a plurality of strips to manufacture a plurality of electrode tab that the conductive adhesive part and the releasing film are stacked; removing the releasing film from the electrode tab; and adhering the electrode tab from which the releasing film is removed to one surface of the electrode current collector.

The coating of the conductive adhesive solution may allow a coated region where the conductive adhesive solution is coated in a vertical direction and a non-coated region where the conductive adhesive solution is not coated to be alternately disposed in a horizontal direction.

The plurality of strips may be cut so that the electrode tab includes one coated region and one non-coated region.

The electrode tab may include an electrode tab overlapping a part stacked at the electrode current collector and an electrode tab extension part extending from the electrode tab overlapping part to the outside of the electrode current collector, a transverse length of the coated region may be the same as the length of the electrode tab overlapping part, and the transverse length of the non-coated region may be the same as the length of the electrode tab extension part.

The adhering of the electrode tab to one surface of the electrode current collector may adhere the electrode tab to the uncoated region where the electrode active material layer is not formed among one surface of the electrode current collector.

The conductive adhesive solution may be manufactured as a slurry type further including a conductive material and an adhesive material.

When the gas generation material reaches the decomposition voltage, the gas may be generated such that the volume of the conductive adhesive part may increase.

The decomposition voltage may be a voltage of 4.5 V or more.

The gas generation material may include at least one among Li₂CO₃, K₂CO₃, CaCO₃, BaCO₃, and SrCO₃.

The thickness of the conductive adhesive part may be 10 micrometer or less.

According to exemplary embodiments of the present invention, by including the gas generation material in the conductive adhesive part between the electrode tab and the electrode current collector, the manufacturing of the electrode for the rechargeable battery ensuring safety in the abnormal operation state such as an overcharge is possible without increasing the resistance.

Also, the electrode tab with the conductive adhesive part and the releasing film may be mass produced through a process of slitting and cutting the metal plate material for the electrode tab in which the conductive adhesive part and the releasing film are formed without a separate welding process.

### [Description of the Drawings]

FIG. 1 is a perspective view of a conventional jelly-roll type of electrode assembly.
FIG. 2 is an exploded perspective view of the electrode assembly of FIG. 1 before being wound.
FIG. 3 is a schematic cross-sectional view when a positive tab is welded to a conventional positive current collector.
FIG. 4 is a perspective view of a jelly-roll type of electrode assembly manufactured by the method of the present invention.
FIG. 5 is an exploded perspective view of the electrode assembly of FIG. 4 before being wound.
FIG. 6 is an enlarged top plan view of a portion A of FIG. 5.
FIG. 7 is a cross-sectional view taken along a direction V-V' of FIG. 6.
FIG. 8 is an enlarged top plan view of a portion C of FIG. 7.
FIG. 9 is an enlarged cross-sectional view of a portion C of FIG. 7 after gas generation.
FIG. 10 is a perspective view of an electrode tab manufactured by the method according to the present invention.
FIG. 11 and FIG. 12 are views to explain an electrode assembly manufacturing method according to an exemplary embodiment of the present invention.

### [Mode for Invention]

Hereinafter, various exemplary embodiments of the present disclosure will be described in detail with reference to accompanying drawings so that those skilled in the art can easily carry out the present invention. As those skilled in the art would realize, the described embodiments may be modified in various different ways, all without departing from the scope of the present invention as defined in the appended claims.

For clarity of description of the present invention, parts unrelated to the description are omitted, and the same reference numbers will be used throughout this specification to refer to the same or like parts.

In addition, the size and thickness of each configuration shown in the drawings are arbitrarily shown for better understanding and ease of description, but the present invention is not limited thereto. In the drawings, the thickness of layers, films, panels, regions, etc., are exaggerated for clarity. In the drawings, for better understanding and ease of description, the thicknesses of some layers and areas are exaggerated.

It will be understood that when an element such as a layer, film, region, or substrate is referred to as being "on" another element, it can be directly on the other element or intervening elements may also be present. In contrast, when an element is referred to as being "directly on" another element, there are no intervening elements present. Further, in the specification, the word "on" or "above" means positioned on or below the object portion, and does not necessarily mean positioned on the upper side of the object portion based on a gravitational direction.

In addition, unless explicitly described to the contrary, the word "comprise" and variations such as "comprises" or "comprising" will be understood to imply the inclusion of stated elements but not the exclusion of any other elements.

Further, in the specification, the phrase "on a plane" means viewing the object portion from the top, and the phrase "on a cross-section" means viewing a cross-section of which the object portion is vertically cut from the side.

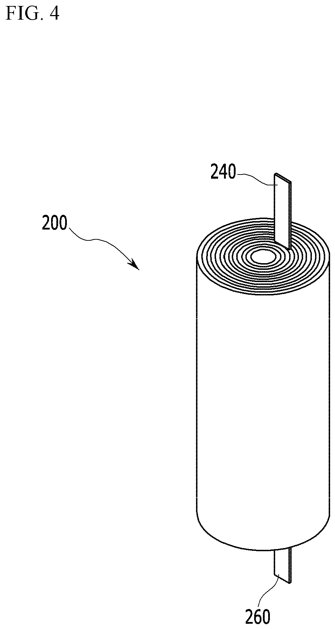

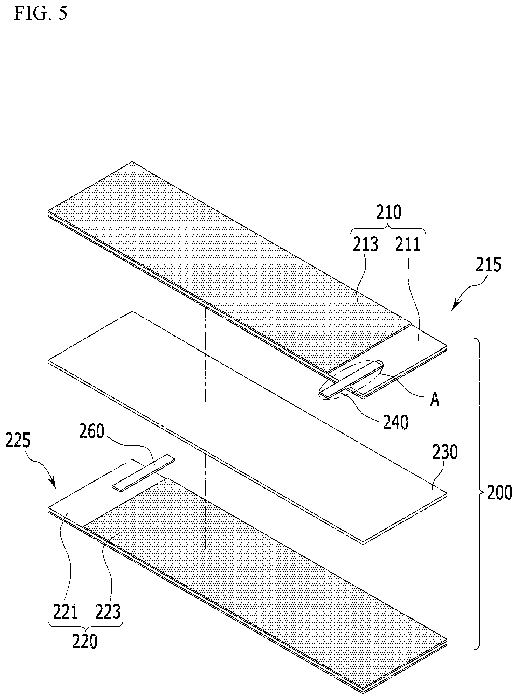

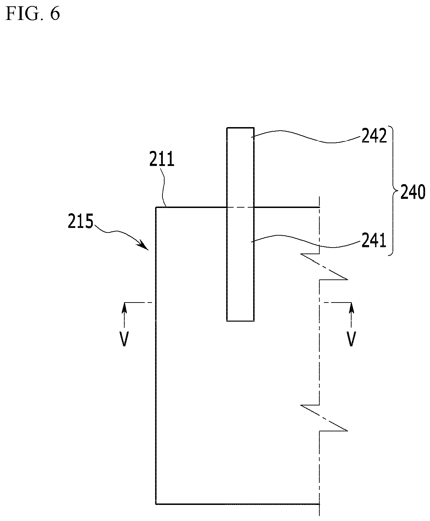

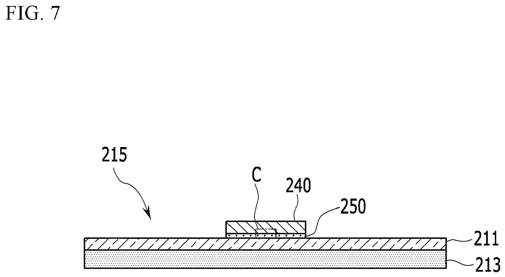

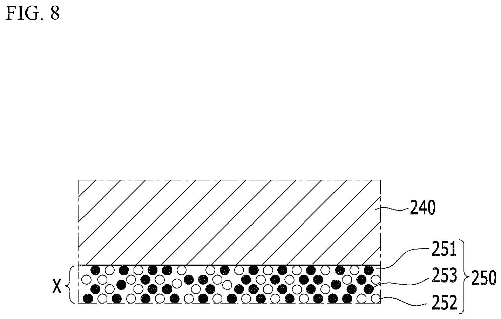

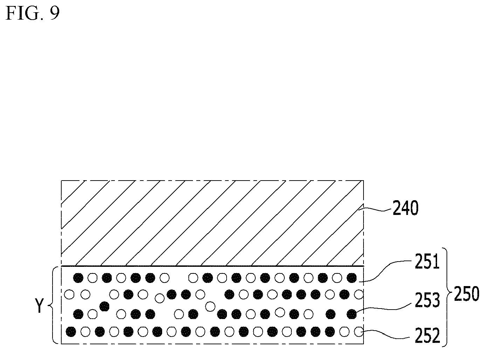

FIG. 4 is a perspective view of a jelly-roll type electrode assembly manufactured by the present invention. FIG. 5 is an exploded perspective view of the electrode assembly of FIG. 4 before being wound. FIG. 6 is an enlarged top plan view of a portion A of FIG. 5. FIG. 7 is a cross-sectional view taken along a direction V-V' of FIG. 6. FIG. 8 is an enlarged top plan view of a portion C of FIG. 7. FIG. 9 is an enlarged cross-sectional view of a portion C of FIG. 7 after gas generation.

Referring to FIG. 4 and FIG. 5, an electrode assembly 200 according to the present exemplary embodiment includes a pair of electrodes and a separator 230 interposed therebetween. The pair of electrodes includes a positive electrode 210 and a negative electrode 220. For convenience of explanation, FIG. 5 shows a state before the electrode assembly 200 is wound. Referring to FIG. 5, the positive electrode 210, the separator 230, and the negative electrode 220 are formed in a sheet shape and are sequentially stacked. These electrode assemblies 200 are encapsulated and received in an exterior member (not shown) with an electrolyte solution to be manufactured as a rechargeable battery.

Since the configuration for the positive electrode 210 and the configuration for the negative electrode 220 are the same as or similar to each other, in FIG. 5, the description will be made on the basis of the positive electrode 210 among the electrodes.

Referring to FIG. 5, the positive electrode 210 includes a sheet-shaped positive current collector 211 and a positive active material layer 213 formed on the positive current collector 211. The positive current collector 211 includes a positive uncoated region 215 in which the positive active material layer 213 is not formed. The positive active material layer 213 is preferably formed on both surfaces of the positive current collector 211, as shown. The positive active material layer 213 is coated on a portion of the positive current collector 211, and as shown in FIG. 5, as an exemplary embodiment, it may be coated while leaving the area of the rectangle at one end of the length direction of the positive current collector 211. The portion where the positive active material layer 213 is not formed corresponds to the positive uncoated region 215. The positive uncoated region 215 according to the present exemplary embodiment is formed on only one side of the positive current collector 211, unlike in the conventional art in which it is formed on both surfaces of the positive current collector 211. A positive tab 240 is adhered to the positive uncoated region 215, and the positive tab 240 and the positive electrode 210 are electrically connected to each other. In the present exemplary embodiment, the positive tab 240 may be bonded to the positive uncoated region 215 by a conductive adhesive part, which will be described later, and this is described with reference to FIG. 7 and the like.

It is possible to form the positive uncoated region 215 on only one side of the electrode current collector without damaging the positive active material layer 213 by attaching the positive tab 240 through a conductive adhesive part 250 instead of by the conventional welding. Therefore, the area of the positive active material layer 213 may be increased to increase the amount of the active material, thereby increasing of the capacity of the rechargeable battery. Particularly, in the high power model of the battery, since the number of electrode tabs increases, the capacity improvement effect is larger than in the conventional one.

However, the position and shape of the positive uncoated region 215 are not limited thereto, and may be modified. For example, the positive uncoated region 215 may be formed with the area of the rectangle at one end of the width direction of the positive current collector 211. Also, the positive uncoated region 215 may be formed with the area of the rectangle at the center of the positive current collector 211. In addition, in the present exemplary embodiment, the positive uncoated region 215 is formed to extend from one side of the positive current collector 211 to the other, however the positive uncoated region 215 has a minimum size only in the region overlapping the positive tab 240. The negative electrode 220 includes a negative current collector 221 of the sheet shape like the positive electrode 210 mentioned above and a negative active material layer 223 formed on a negative current collector 221, and the negative current collector 221 includes a negative uncoated region 225 in which a negative active material layer 223 is not formed. The contents of the positive electrode 210 described above may also be applied to the constituent elements related to the negative electrode 220.

Referring to FIG. 5, the positive uncoated region 215 is disposed at one end of the length direction of the positive current collector 211, and the negative uncoated region 225 is disposed at one end of the negative direction of the negative current collector 221, but opposite to the end where the positive uncoated region 215 is disposed. However, the positions of the positive uncoated region 215 and the negative uncoated region 225 are not limited thereto, and may be the same or they may overlap each other.

As the material of the positive current collector 211, aluminum is mainly used. In addition, the material of the positive current collector 211 may be stainless steel, nickel, titanium, fire carbon, or aluminum, or a surface-treatment of a stainless steel surface with carbon, nickel, titanium, silver, etc. may be provided. Furthermore, there is no limit to the material of a positive current collector 211 as long as it is a material with high conductivity and not causing a chemical change of the rechargeable battery.

As the negative current collector 221, a copper material is mainly used. In addition, the material of the negative current collector 221 may be stainless steel, aluminum, nickel, titanium, sintered carbon, or copper, or a surface treatment of a stainless steel surface with carbon, nickel, titanium, silver, etc. and an aluminum-cadmium alloy may be used.

The positive active material forming the positive active material layer 213 is a lithium-containing active material, and as a representative example, a metal oxide such as LiCoO₂, LiNiO₂, LiMnO₂, LiMn₂O₄, LiFePO₄, or Li_{1+z}Ni_{1-x-y}COₓM_{y}O₂ (0≤x≤1, 0≤y≤1, 0≤x+y≤1, 0≤z≤1, M is a metal such as Al, Sr, Mg, La, or Mn) may be used. The negative active material forming the negative active material layer 223 is a carbon-containing active material, and as the negative active material, a carbon material such as crystalline carbon, amorphous carbon, a carbon composite, carbon fiber, and the like, or a lithium metal, a lithium alloy, or the like may be used.

The positive active material layer 213 and the negative active material layer 223 may further include a binder and a conductive material in addition to the active material. The binder has a function of easily adhering the active material particles to each other and easily adhering the active material to the current collector, and typical examples may include polyvinyl alcohol, carboxylmethyl cellulose, hydroxypropyl cellulose, diacetyl cellulose, polyvinyl chloride, carboxylated polyvinyl chloride, polyvinyl fluoride, a polymer including ethylene oxide, polyvinylpyrrolidone, polyurethane, polytetrafluoroethylene, polyvinylidene fluoride, polyethylene, polypropylene, styrene-butadiene rubber, acrylated styrene-butadiene rubber, epoxy resin, nylon, and the like, however it is not limited thereto. The conductive material provides conductivity to the electrode, and may be any electron conductive material that does not cause a chemical change in the battery configuration, and examples may include a carbon-based material such as natural graphite, artificial graphite, carbon black, acetylene black, ketjen black, and carbon fiber, a metal-based material such as a metal powder or a metal fiber of copper, nickel, aluminum, silver, etc., conductive polymers such as a polyphenylene derivative, or a mixture of conductive materials.

The separator 230 is not particularly limited as long as it is a porous material. The separator 230 may be made of a polymer layer with a porous, for example, porous polyolefin layer, polyvinylidene fluoride-hexafluoro propylene, polyvinylidene fluoride-trichloroethylene, polymethylmethacrylate, polyacrylonitrile, polyvinylpyrrolidone, polyvinyl acetate, an ethylene vinyl acetate copolymer, polyethylene oxide, cellulose acetate, cellulose acetate butyrate, cellulose acetate propionate, cyanoethyl pullulan, cyanoethyl polyvinyl alcohol, cyanoethyl cellulose, cyanoethyl sucrose, pullulan, carboxyl methyl cellulose, acrylonitrile styrene butadiene copolymer, polyethylene terephthalate, polybutylene terephthalate, polyester, polyacetal, polyamide, polyetheretherketone, polyethersulfone, polyphenylene oxide, polyphenylene sulfide, polyethylene naphthalene, non-woven fabric layer, a layer with a porous web structure, or mixtures thereof.

An inorganic particle may be attached to one surface or both surfaces of the separator 230. The inorganic particles are preferably inorganic particles having a high dielectric constant of 5 or more, and more preferably inorganic material particles having a dielectric constant of 10 or more and a low density. This is so lithium ions moving in the cell may be easily transferred. Non-limiting examples of the inorganic particles having the high dielectric constant of 5 or more include Pb(Zr, Ti)O₃ (PZT), Pb₁₋ₓLaₓZr_{1-y}Ti_{y}O₃ (PLZT), Pb(Mg₃Nb_{2/3})O₃-PbTiO₃ (PMN-PT), BaTiO₃, HfO₂, SrTiO₃, TiO₂, Al₂O₃, ZrO₂, SnO₂, CeO₂, MgO, CaO, ZnO, Y₂O₃, or mixtures thereof.

Referring to FIG. 5 and FIG. 6, the positive tab 240 may be a metal belt-type member having a predetermined width and length. The positive tab 240 overlaps the positive uncoated region 215 of the positive current collector 211 to be electrically connected thereto. Specifically, the positive tab 240 includes a positive tab overlapping part 241 stacked on the positive current collector 211, and a positive tab extension part 242 protruded and extended from one end of the positive current collector 211 to the outside in the positive tab overlapping part 241.

The positive tab overlapping part 241 is fixed to the positive uncoated region 215 of the positive current collector 211. The positive electrode 210 to which the positive tab 240 is fixed is sequentially stacked and wound with the separator 230 and the negative electrode 220, so that the positive tab overlapping part 241 overlaps the positive electrode 210 and the separator 230.

As shown in FIG. 7, the positive tab 240 is attached to the positive uncoated region 215 of the positive current collector 211 through the conductive adhesive part 250 rather than the welding. Therefore, the positive electrode 210 and the positive tab 240 are electrically connected. The conductive adhesive part 250 has adhesive, thereby fixing the positive tab 240 to the positive current collector 211.

In particular, the conductive adhesive part 250 may be formed in the same shape and area as the positive tab overlapping part 241. It is necessary to derive the length or area of the conductive adhesive part 250 that satisfies the minimum required adhesive. However, in the case of the high power model, the temperature may be locally raised due to a current concentration when the area of the positive tab overlapping part 241 is narrow. Therefore, the conductive adhesive part 250 may be formed to have an area which is the same as the entire area of the positive tab overlapping part 241 touched the positive current collector 211.

Referring to FIG. 8, the conductive adhesive part 250 includes an adhesive material 251, a conductive material 252, and a gas generation material 253. The adhesive material 251 should not react with the electrolyte solution, and for example, acrylate series are preferable. In the adhesive material 251, it may be that butyl acrylate/4-hydroxybutyl acrylate = 98:2 or ethyl hexyl acrylate/acrylic acid = 98:2.

The positive tab 240 may be be formed of the same kind of metal material as the positive current collector 211. For example, it may be aluminum. In such a case, the conductive material 252 of the conductive adhesive part 250 in the positive electrode 210 is preferably one of aluminum particles, carbon nanotubes (CNT), and carbon black. Particularly, it is preferably aluminum particles. Thus, a path of the current based on the aluminum material may be provided between the positive tab 240 - the conductive adhesive part 250 - the positive current collector 211 without increasing the contact resistance. The aluminum particles may be spherical-shaped particles.

A negative tab 260 may have the same kind of metal material as the negative current collector 221. For example, it may be copper. In such a case, the conductive material (not shown) of the conductive adhesive part in the negative electrode 220 is preferably one of CNT, carbon black, and copper particles. Particularly, copper particles are preferable. Thus, the path of the current based on the copper material may be provided between the negative tab 260 - the conductive adhesive part (not shown) - the negative current collector 221 without increasing the contact resistance.

In the normal operating state of the rechargeable battery, the conductive adhesive part 250 has conductivity at a level at which the resistance is not significantly increased compared with the case where the gas generation material 253 is not included due to the electrical passage of the conductive material 252 having low resistance.

The gas generation material 253 is composed of a material which is decomposed when a predetermined voltage is reached to generate a gas. Herein, the predetermined voltage may be defined as a decomposition voltage for decomposing the gas generation material 253 to generate a gas, and has a different value depending on the type of the gas generation material 253.

As shown in FIG. 8 and FIG. 9, the conductive adhesive part 250 before reaching the decomposition voltage has a first thickness X, but when the decomposition voltage is reached due to the abnormal operating state and then the gas is generated by the gas generation material 253, the volume of the conductive adhesive part 250 increases due to the generated gas such that the thickness of the conductive adhesive part 250 may become a second thickness Y that is larger than the first thickness X. Depending on the increased volume of the conductive adhesive part 250, a flow of the conductive material 252 occurs and the distance between the conductive materials 252 increases. Since the distance between the conductive material 252 increases, the resistance of the conductive adhesive part 250 increases sharply which causes an increase in the resistance and an increase in the voltage of the battery cell, thereby reaching a finish voltage. Through the above process, the abnormal operation state such as the overcharge or the overdischarge is terminated, and the stability of the secondary battery may be ensured.

The gas generating substance 253 is not particularly limited as long as it is a substance which generates gas upon reaching a predetermined voltage. For example, it may be a Li₂CO₃, K₂CO₃, CaCO₃, BaCO₃, or SrCO₃ material. Particularly, Li₂CO₃ is preferable. If Li₂CO₃ is used as the gas generation material 253 and the voltage applied in the electrode assembly 200 is 4.7-4.85 V or more, Li₂CO₃ is decomposed such that CO and CO₂ gas is produced. The volume of the conductive adhesive part 250 is increased by the generated CO and CO₂ gas. The decomposition voltage may vary slightly depending on the type of gas generation material 253, but according to the present exemplary embodiment, by considering the decomposition voltage of Li₂CO₃ (4.7 V or more), K₂CO₃ (4.5 V or more), CaCO₃ (4.8 V or more), BaCO₃ (4.9 V or more), and SrCO₃ (4.9 V or more), it is preferable that the decomposition voltage is 4.5 V or more.

The conductive adhesive part 250 including the adhesive material 251, the conductive material 252, and the gas generation material 253 may be in a form that is coated as a slurry type between the electrode current collector and the electrode tab. Since the conductive adhesive part 250 is in the slurry form, the thickness of the conductive adhesive part 250 may be more easily adjusted or the content of the gas generation material 253 in the conductive adhesive part 250 may be adjusted.

As the content of the gas generating material 253 increases, the amount of gas generated at a predetermined voltage in the abnormal operating state increases, and then the end voltage may be reached more quickly, but simultaneously the gas acts as a resistance in the battery such that the performance of the battery may be deteriorated. It is necessary to adjust a quantum appropriately according to a field in which the battery is used. In an exemplary embodiment of the present invention, by adjusting the slurry thickness or by controlling the content of the gas generating material 253, the resistance of the conductive adhesive part 250 can be freely adjusted for each manufactured battery, thereby reducing the manufacturing cost of the battery, without any additional process, and the degree of the reaching voltage for the overcharge or the overdischarge and the resistance of the conductive adhesive part 250 may be freely adjusted for each manufactured battery, thereby reducing a cost of the battery manufacturing.

In addition, since it is coated in the slurry form, the adhesive material 251, the conductive material 252, and the gas generation material 253 are dispersed without being concentrated in a specific part, thereby effectively securing electrical conductivity, an adhesion degree, and the reaching degree of the end voltage.

Compared with the conductive adhesive part 250 of the adhesive material 251, the conductive material 252, and the gas generation material 253, it is preferable for the weight ratio of the adhesive material 251 to be fixed at 40 %, the weight ratio of the conductive material 252 to be 30 % to 50 %, and the weight ratio of the gas generation material 253 to be 10 % to 30 %.

Since the conductive adhesive part 250 may act as the resistance in the cell, the thickness of the conductive adhesive part 250 is preferably less than 10 micrometers.

As described with reference to FIG. 3, in the conventional art, the uncoated region in which the active material layer is not coated is provided on both surfaces of the electrode current collector and the tab is welding-bonded to the uncoated region, however in an exemplary embodiment of the present invention, since the adhering is performed through the conductive adhesive part 250 that is not welding, as shown in FIG. 5 and FIG. 7, the positive uncoated region 215 may be formed on the other surface of the positive current collector 211 to form the positive tab 240 even in the state that the positive active material layer 213 is completely coated on one surface of the positive current collector 211. Therefore, since the uncoated region is not formed on the surface opposite to the surface to which the positive tab 240 is adhered, the sufficient capacity may be secured. Since the structure for the positive electrode 210 and the structure for the negative electrode 220 are the same as or similar to each other, it is possible to secure the battery capacity even in the case of the negative electrode 220.

If the gas generation material is placed in the electrode layer containing the active material for the purpose of assuring the stability of the overcharge, the external short circuit, an acicular penetration, the local damage, etc., the amount of the active material is reduced by the space occupied by the gas generation material and the battery capacity is reduced, however, according to an exemplary embodiment of the present invention, the battery generation deterioration due to active material reduction is minimized by placing the gas generation material in the conductive adhesive part 250 between the electrode current collectors 211 and 221 and the electrode tabs 240 and 260.

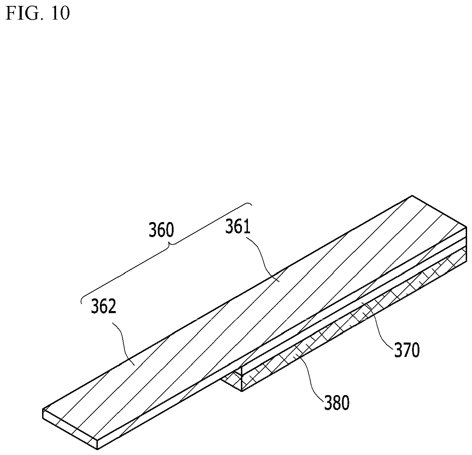

FIG. 10 is a perspective view of an electrode tab according to an exemplary embodiment of the present invention. The electrode tab 360 of FIG. 10 may be used in the manufacturing of the electrode assembly 200 as the above-described positive tab 240 or negative tab 260.

Referring to FIG. 10, the electrode tab 360 is electrically connected to the electrode current collector, and is a metal belt type of member having a width and a length. The electrode tab 360 includes an electrode tab overlapping part 361 stacked at the electrode current collector, and an electrode tab extension part 362 extending from the electrode tab overlapping part 361 outside the electrode current collector. A conductive adhesive part 370 and a releasing film 380 are stacked at the electrode tab overlapping part 361 with the same shape and area as the electrode tab overlapping part 361.

Hereinafter, the manufacturing method of the electrode assembly capable of mass production of the rechargeable battery is described.

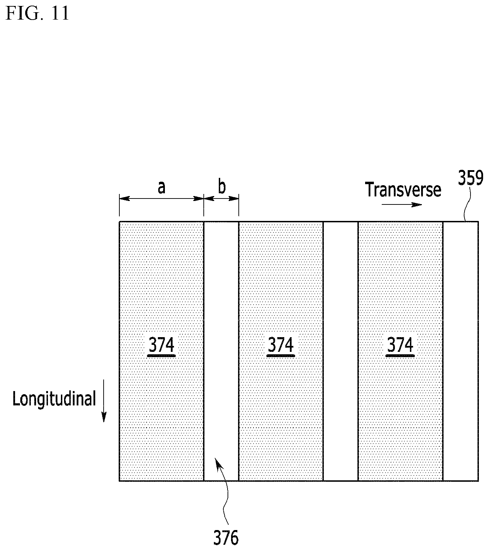

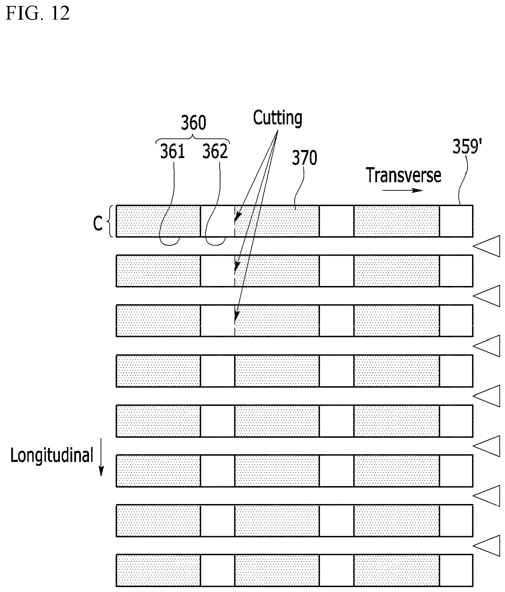

FIG. 11 and FIG. 12 are views to explain an electrode assembly manufacturing method according to the present invention.

The adhesive material, the conductive material, and the gas generation material are mixed to manufacture the conductive adhesive solution of the slurry form. The adhesive material should not react with the electrolyte solution as described above, and for example, acrylate series are preferable. The gas generating material is not particularly limited as long as it is a material that generates gas when a predetermined voltage is reached, and for example, Li₂CO₃, K₂CO₃, CaCO₃, BaCO₃, or SrCO₃ materials may be used. Particularly, Li₂CO₃ is preferable.

Referring to FIG. 11, the conductive adhesive solution is coated on a metal plate material 359 for the tab. In this case, as shown in FIG. 11, a coated region 374 where the conductive adhesive solution is coated in the vertical direction and a non-coated region 376 where the conductive adhesive solution is not coated are alternately formed according to the horizontal direction. A transverse length a of the coated region 374 is the same as the length of the electrode tab overlapping part 361 of FIG. 10, and a transverse length b of the non-coated region 376 is the same as the length of the electrode tab extension part 362 of FIG. 10. The coated region 374 is formed in the stripe pattern rather than on the entire surface of the metal plate material 359 for the tab. This forming method may be performed by using slot die coating similar to that used for coating the electrode active material layer, or by placing a barrier layer such as a bar on the non-coated region 376 and sprinkling the conductive adhesive solution thereon.

Next, a releasing film covering the coated region 374 and the non-coated region 376 is stacked on the metal plate material 359 for the tab.

Next, the conductive adhesive solution of the coated region 374 is dried to be converted into a conductive adhesive part 370.

Next, as shown in FIG. 12, to be suitable for the width of the electrode tab 360, the metal plate material 359 for the tab of FIG. 11 is slit into a plurality of strips 359' along the vertical direction.

Next, in any one strip 359', when the strip 359' is cut so that one coated region 374 and one non-coated region 376 are included, the plurality of electrode tabs 360 of which the conductive adhesive part 370 and the releasing film 380 are stacked at the electrode tab overlapping part 361 with the same shape and area as the electrode tab overlapping part 361 may be obtained like in FIG. 10.

In the manufacturing process of the electrode assembly 200, after the reel-shaped strip 359' is inserted, and the strip 359' is cut so that one coated region 374 and one non-coated region 376 are included in a winder to obtain the electrode tab 360, the electrode tab 360 may be adhered to the electrode current collector to manufacture the electrode assembly without troublesome welding through a series of processes by removing the releasing film 380 so that the conductive adhesive part 370 is placed at the positive uncoated region 215 and/or the negative uncoated region 225.

The electrode tabs according to the present disclosure is used to manufacture of the electrode assembly and the rechargeable battery including the same by replacing the electrode tab of the conventional welding method. The electrode tab according to the present disclosure is manufactured as the adhesive tab to manufacture the rechargeable battery by omitting the conventional complicated welding process through the simple operation of stripping the releasing film and bonding the electrode tab to the electrode current collector. In order to attach the tab to the current collector in the conventional electrode assembly manufacturing process, since an ultrasonic welding process is performed separately, there is a problem that efficiency is deteriorated because an equipment cost and maintenance cost related to the welding are incurred. In the present invention, this problem is solved by using the electrode tab having the release film attached thereto.

The electrode assembly of the present disclosure which is capable of being manufactured through this method, may allow the connection of the electrode tab and the electrode current collector without damaging the active material layer. The uncoated region is formed only on one surface of the current collector, thus leading to the increase of the capacity of the rechargeable battery. Also, by disposing the gas generation material for safety ensuring at the conductive adhesive part between the electrode current collector and the electrode tab, not in the electrode layer, the battery efficiency deterioration may be minimized due to the active material reduction.

As above-described, according to the present invention, by improving the connection structure between the electrode tab and the current collector, the rechargeable battery for minimizing the limitation of the battery capacity may be manufactured while ensuring the safety for the abnormal operation state such as the overcharge, the external short, and the like. Particularly, in a high power model, where the number of electrode tabs increases, a current blocking effect and a battery capacity improvement effect are more apparent.

### <Description of symbols>

- 200:: electrode assembly
- 250, 370:: conductive adhesive part
- 251:: adhesive material
- 252:: conductive material
- 253:: gas generation material

## Claims

1. An electrode assembly manufacturing method comprising:
coating a conductive adhesive solution including a gas generation material (253) on a metal plate material for an electrode tab (240, 260);
forming a releasing film (380) on the metal plate material for the electrode tab to cover the coated conductive adhesive solution;
drying the conductive adhesive solution to be changed into a conductive adhesive part (250);
slitting the metal plate material (359) for the electrode tab to form a plurality of strips (359');
cutting a plurality of strips (359') to manufacture a plurality of electrode tab that the conductive adhesive part (250) and the releasing film (380) are stacked;
removing the releasing film (380) from the electrode tab (240, 260); and
adhering the electrode tab (240, 260) from which the releasing film (380) is removed to one surface of the electrode current collector (211, 221).

2. The electrode assembly manufacturing method of claim 1, wherein
the coating of the conductive adhesive solution allows a coated region where the conductive adhesive solution is coated in a vertical direction and a non-coated region where the conductive adhesive solution is not coated to be alternately disposed in a horizontal direction.

3. The electrode assembly manufacturing method of claim 2, wherein
the plurality of strips (359') are cut so that the electrode tab (240, 260) includes one coated region (374) and one non-coated region (376).

4. The electrode assembly manufacturing method of claim 3, wherein
the electrode tab (240, 260) includes an electrode tab overlapping part (361) stacked at the electrode current collector (211, 221) and an electrode tab extension part (362) extending from the electrode tab overlapping part (361) to the outside of the electrode current collector (211, 221), and
a transverse length of the coated region (374) is the same as the length of the electrode tab overlapping part (361) and the transverse length of the non-coated region (376) is the same as the length of the electrode tab extension part (362).

5. The electrode assembly manufacturing method of claim 1, wherein
the adhering of the electrode tab (240, 260) to one surface of the electrode current collector (211, 221) adheres the electrode tab to the uncoated region (215, 225) where the electrode active material layer is not formed among one surface of the electrode current collector.

6. The electrode assembly manufacturing method of claim 1, wherein
the conductive adhesive solution is manufactured as a slurry type further including a conductive material (252) and an adhesive material (251),
wherein the conductive material provides conductivity to the electrode, and is any electron conductive material that does not cause a chemical change in the battery configuration.

7. The electrode assembly manufacturing method of claim 1, wherein the gas generation material (253) includes at least one among Li₂CO₃, K₂CO₃, CaCO₃, BaCO₃, and SrCO₃.

8. The electrode assembly manufacturing method of claim 1, wherein the thickness of the conductive adhesive part is 10 micrometer or less.

## Patentansprüche

1. Elektrodenanordnung-Herstellungsverfahren, umfassend:
Beschichten einer leitfähigen Haftmittellösung, welche ein Gas-Erzeugungsmaterial (253) umfasst, auf ein Metallplatten-Material für einen Elektrodenstreifen (240, 260);
Bilden eines Freigabefilms (380) auf dem Metallplatten-Material für den Elektrodenstreifen, um die aufgebrachte leitfähige Haftmittellösung zu bedecken;
Trocknen der leitfähigen Haftmittellösung, welche in einen leitfähigen Haftmittelteil (250) zu ändern ist;
Schlitzen des Metallplatten-Materials (359) für den Elektrodenstreifen, um eine Mehrzahl von Bändern (359') zu bilden;
Schneiden einer Mehrzahl von Bändern (359'), um eine Mehrzahl von Elektrodenstreifen herzustellen, wobei der leitfähige Haftmittelteil (250) und der Freigabefilm (380) gestapelt werden;
Entfernen des Freigabefilms (380) von dem Elektrodenstreifen (240, 260); und
Anbringen des Elektrodenstreifens (240, 260), von welchem der Freigabefilm (380) entfernt wird, an einer Fläche des Elektroden-Stromsammlers (211, 221).

2. Elektrodenanordnung-Herstellungsverfahren nach Anspruch 1, wobei das Beschichten der leitfähigen Haftmittellösung einer beschichteten Region, wo die leitfähige Haftmittellösung in einer vertikalen Richtung beschichtet ist, und einer nicht-beschichteten Region, wo die leitfähige Haftmittellösung nicht beschichtet ist, erlaubt, abwechselnd in einer horizontalen Richtung angeordnet zu sein.

3. Elektrodenanordnung-Herstellungsverfahren nach Anspruch 2, wobei die Mehrzahl von Bändern (359') derart geschnitten werden, dass der Elektrodenstreifen (240, 260) eine beschichtete Region (374) und eine nichtbeschichtete Region (376) umfasst.

4. Elektrodenanordnung-Herstellungsverfahren nach Anspruch 3, wobei
der Elektrodenstreifen (240, 260) einen Elektrodenstreifen-Überlappteil (361) umfasst, welcher an dem Elektroden-Stromsammler (211, 221) gestapelt ist, sowie einen Elektrodenstreifen-Erstreckungsteil (362), welcher sich von dem Elektrodenstreifen-Überlappteil (361) zu der Außenseite des Elektroden-Stromsammlers (211, 221) erstreckt, und
eine transversale Länge der beschichteten Region (374) dieselbe ist wie die Länge des Elektrodenstreifen-Überlappteils (361) und die transversale Länge der nicht-beschichteten Region (376) dieselbe ist wie die Länge des Elektrodenstreifen-Erstreckungsteils (362).

5. Elektrodenanordnung-Herstellungsverfahren nach Anspruch 1, wobei
das Anbringen des Elektrodenstreifens (240, 260) an einer Fläche des Elektroden-Stromsammlers (211, 221) den Elektrodenstreifen an der unbeschichteten Region (215, 225) anbringt, wo die aktive Elektrodenmaterial-Schicht nicht gebildet ist, aus einer Fläche des Elektroden-Stromsammlers.

6. Elektrodenanordnung-Herstellungsverfahren nach Anspruch 1, wobei
die leitfähige Haftmittellösung als ein Schlammtyp hergestellt ist, welcher ferner ein leitfähiges Material (252) und ein Haftmaterial (251) umfasst,
wobei das leitfähige Material Leitfähigkeit für die Elektrode bereitstellt und ein beliebiges elektronenleitfähiges Material ist, welches keine chemische Veränderung in der Batteriekonfiguration hervorruft.

7. Elektrodenanordnung-Herstellungsverfahren nach Anspruch 1, wobei das Gas-Erzeugungsmaterial (253) wenigstens eines aus Li₂CO₃, K₂CO₃, CaCO₃, BaCO₃ und SrCO₃ umfasst.

8. Elektrodenanordnung-Herstellungsverfahren nach Anspruch 1, wobei die Dicke des leitfähigen Haftmittelteils 10 Mikrometer oder weniger beträgt.

## Revendications

1. Procédé de fabrication d'ensemble d'électrodes comprenant :
le revêtement d'une solution adhésive conductrice comportant un matériau de génération de gaz (253) sur un matériau de plaque métallique pour une languette d'électrode (240, 260) ;
la formation d'un film anti-adhésif (380) sur le matériau de plaque métallique pour la languette d'électrode afin de recouvrir la solution adhésive conductrice de revêtement ;
le séchage de la solution adhésive conductrice pour se transformer en une partie adhésive conductrice (250);
le refendage du matériau de plaque métallique (359) pour la languette d'électrode afin de former une pluralité de bandes (359') ;
le découpage d'une pluralité de bandes (359') pour fabriquer une pluralité de languettes d'électrodes au niveau desquelles la partie adhésive conductrice (250) et le film anti-adhésif (380) sont empilés ;
le retrait du film anti-adhésif (380) de la languette d'électrode (240, 260) ; et
le collage de la languette d'électrode (240, 260) à partir de laquelle le film anti-adhésif (380) est retiré à une surface du collecteur de courant d'électrode (211, 221).

2. Procédé de fabrication d'ensemble d'électrodes selon la revendication 1, dans lequel le revêtement de la solution adhésive conductrice permet à une région revêtue où la solution adhésive conductrice est revêtue dans une direction verticale et une région non revêtue où la solution adhésive conductrice n'est pas revêtue pour être disposées en alternance dans une direction horizontale.

3. Procédé de fabrication d'ensemble d'électrodes selon la revendication 2, dans lequel la pluralité de bandes (359) sont coupées de sorte que la languette d'électrode (240, 260) comporte une région revêtue (374) et une région non revêtue (376).

4. Procédé de fabrication d'ensemble d'électrodes selon la revendication 3, dans lequel la languette d'électrode (240, 260) comporte une partie de chevauchement de languette d'électrode (361) empilée au niveau du collecteur de courant d'électrode (211, 221) et une partie d'extension de languette d'électrode (362) s'étendant de la partie de chevauchement de languette d'électrode (361) vers l'extérieur du collecteur de courant d'électrode (211, 221), et
une longueur transversale de la région revêtue (374) est identique à la longueur de la partie de chevauchement de languette d'électrode (361) et la longueur transversale de la région non revêtue (376) est identique à la longueur de la partie d'extension de languette d'électrode (362).

5. Procédé de fabrication d'ensemble d'électrodes selon la revendication 1, dans lequel le collage de la languette d'électrode (240, 260) sur une surface du collecteur de courant d'électrode (211, 221) colle la languette d'électrode à la région non revêtue (215, 225) où la couche de matériau actif d'électrode n'est pas formée parmi une surface du collecteur de courant d'électrode.

6. Procédé de fabrication d'ensemble d'électrodes selon la revendication 1, dans lequel la solution adhésive conductrice est fabriquée sous forme de pâte comportant en outre un matériau conducteur (252) et un matériau adhésif (251),
dans lequel le matériau conducteur fournit une conductivité à l'électrode, et est matériau conducteur d'électrons quelconque qui ne provoque pas de changement chimique dans la configuration de batterie.

7. Procédé de fabrication d'ensemble d'électrodes selon la revendication 1, dans lequel le matériau de génération de gaz (253) comporte au moins un parmi Li₂CO₃,K₂CO₃, CaCO₃, BaCO₃ et SrCO₃.

8. Procédé de fabrication d'ensemble d'électrodes selon la revendication 1, dans lequel l'épaisseur de la partie adhésive conductrice est de 10 micromètres ou moins.
